# EUROPEAN PATENT SPECIFICATION

(11) **EP 0 416 665 B1**
(45) Date of publication and mention of the grant of the patent: **02.10.1996**
(21) Application number: 90201917.3
(22) Date of filing: 16.07.1990
(51) Int. Cl.: A23G 3/00, A23D 9/00

(54) **Confectionery filling compositions**
Füllungszusammensetzung für Konfekt
Composition de fourrage pour confiserie

(30) Priority: 25.07.1989 EP 89201948
(43) Date of publication of application: 13.03.1991
(73) Proprietor: UNILEVER N.V., 3013 AL Rotterdam (NL); UNILEVER PLC, London EC4P 4BQ (GB)
(72) Inventor: Cebula, Deryck Josef, Sharnbrook, Bedford MK44 1LQ (GB); Pierce, John Pugh, Sharnbrook, Bedford MK44 1LQ (GB)
(74) Representative: Mulder, Cornelis Willem Reinier, Dr.

(56) References cited:
- EP-A- 304 130
- EP-A- 0 233 856
- EP-A- 0 236 288
- EP-A- 0 290 065
- EP-A- 0 375 240
- US-A- 3 479 191

## Description

The present invention relates to confectionery products, and in particular to filling compositions for such products which comprise polyol fatty acid polyesters in the fat phase.

In many confectionery products centre or layered fillings are essential parts of the overall product. Such fillings may be solid or relatively fluid, they may consist of a single fat phase, or a w/o- or o/w-emulsion, or contain dispersed confectionery items, such as nuts, fruits and the like.

The more fluid such fillings are, in general the greater the so-called problem of migration. By migration is understood the diffusion during storage of (parts of) one material into an adjacent material.

Migration may take various forms dependent upon the type of filling. Two major forms are generally distinguished: moisture-migration which results in dehydration of emulsion type fillings with possibly detrimental effects on the consistency of both the dehydrated and neighboring materials, and fat-migration between neighboring fat-containing materials often adversely affecting the rheology and appearance characteristics of those materials.

Moisture-migration may not only have detrimental effects upon the consistency of the neighbouring material, it may also cause or increase the sensitivity of in particular lauric-based fat constituents to microbial hydrolysis and the development of a so-called soapy taste.

In general fat-migration between filling and coating of filled confectionery products result in the filling becoming slightly harder and the coating becoming softer, the degree whereof will depend on the extent of the migration and the compatibility of the fats in the coating and the filling. Due to the fat-solubility of many flavours fat-migration may further affect the flavour balance between the coating and filling parts of the product.

Accordingly, there is a continued search for confectionery filling compositions which are less sensitive to the phenomenon of migration.

Particularly, in the western world there is an increased interest in food products having a reduced caloric content. In the area of confectionery products up to now the focus has been on the reduction of carbohydrates, in particular the sugar component, by using artificial or reduced-calorie sweeteners.

In the general area of low-calorie food products it has been suggested to reduce the caloric content of food products, in particular of the traditionally high-fat food products such as salad dressings, margarines, shortenings, and the like, by replacement of the triglyceride fats by non-absorbable, non-digestible polyol fatty acid polyesters. Low-calorie food products comprising polyol fatty acid polyesters are disclosed in US 3,600,186.

In JP 62/205738 minor amounts of sucrose palmitate (0.5-3 % by weight of the fat phase) are suggested as crystal growth inhibitors in shortenings and chocolate compositions.

In US 3,093,481 polyol fatty acid polyesters such as sucrose octastearate and octapalmitate are suggested for inclusion into shortenings in amounts of up to 0.5 %. They are stated to have beneficial effects upon stability and consistency of the shortenings.

In US 2,886,438 chocolate mixes and shortenings comprising up to 5 % by weight of the fat of a fatty acid ester of an unsubstituted monoalkyl-glucoside, such as ethylglucoside stearate are disclosed. The glucoside esters are stated to have beneficial effects upon consistency and appearance.

In EP 0236 288 the suitability in food products of polyol fatty acid polyesters having specific rheological properties at 37°C is described. Among the many types of food applications also chocolate, chocolate confections and certain fillings are mentioned. The polyol fatty acid polyesters specifically disclosed show an N_{33.3} of over 20 and an N₃₇ of about 12. (Note 33.3°C=92°F and 37°C=98.6°F) suggesting an N_{32.5} of above 20 by interpolation. The special rheological properties are required to prevent a laxative effects and anal leakage. There is no mention of improved resistance towards migration.

EP 0 271 951 discloses cocoa-butter substitutes on the basis of sucrose fatty acid polyesters wherein the fatty acid radicals are derived from lauric-palmitic or capric-stearic sources.

EP 0 285 187 discloses cocoa-butter substitutes for chocolate compositions based on sucrose fatty acid polyesters characterized by a clear melting point between 30 and 36°C and a SCI of over 66 at 6.6°C below the clear melting point.

EP 0 290 420 discloses shortening compositions comprising so-called intermediate melting sucrose fatty acid polyesters (specific viscosity and solids/liquid stability at 37°C and iodine values (IV) of between 25 and 55) in combination with small amounts of solid hardstock material of very low IV. Among the potential applications chocolate confections and fillings are mentioned.

EP 0 375 240 (priority 21.12.88, but published only on 27.06.90) describes the use of certain polyol polyesters as moisture barriers on foodstuffs to preserve crispness of cereals etc. The polyester described had an N₃₃ of 19.6 and an N₂₇ of 35.5 suggesting an N_{32.5} of 21 and an N₃₇ of about 10.

EP-A-304130 discloses fat-continuous aqueous emulsions containing from 10 to 90 wt% of fatty phase, i.e. low-calorie spreads such as margarines and low-fat spreads comprising indigestible polyol fatty acid polyesters and optionally conventional triglyceride fats which are single stream processed and which have a solids profile of preferably an N₅ between 13 and 25, N₂₀ between 8 and 13 and an N₃₅ below 1.5. The spreads disclosed are emulsions of the margarine and low-fat type and contain at least 10% of water. Such products usually contain about 2% of salt, but no sugars or sweeteners. Margarine and low-calorie spreads have a bland to savoury taste whereas a pronounced sweet taste would be incongruous to the consumer in a margarine or low fat spread.

Accordingly, a first aspect of the present invention provides a confectionery filling composition of improved resistance to migration, comprising a continuous fat-phase characterized in that it comprises from 50 to 100 % by weight of a blend of one or more polyol fatty acid polyesters derived from aliphatic polyols which comprise at least four free hydroxyl groups, said blend of polyesters having an N₂₀ of below 50, an N₃₀ from 0-30 and an N_{32.5} of 0-5 and from 10-60 wt% of a conventional sugar, 30-55 wt% of dietetic sweetener or 0.1-5 wt% of high-intensity sweetener or a high-intensity sweetener topping up a reduced amount of conventional sugar or dietetic sweetener. These polyol fatty acid polyesters are (almost) entirely fluid at body temperature.

The present invention further provides confectionery filling compositions of improved resistance to migration, comprising a continuous fat-phase of from 50 to 100% by weight of a blend of one or more polyol fatty polyesters, said blend of polyesters having an N₂₀ of below 50, an N₃₀ from 0-10 and an N_{32.5} of 0-5.

The polyol fatty acid polyesters employed in the present invention are fatty acid polyesters derived from aliphatic compounds which comprise at least four free hydroxyl groups. Such polyols in particular include the group of sugar polyols, which comprises the sugars, i.e. the mono-, di- and polysaccharides, the corresponding sugar alcohols and the derivatives thereof having at least four free hydroxyl groups. Examples of the preferred sugar polyols include glucose, mannose, galactose, xylose, fructose, sorbose, tagatose, ribulose, xylulose, maltose, lactose, cellobiose, raffinose, sucrose, erythritol, mannitol, lactitol, sorbitol, xylitol and α-methylglucoside. The sucrose polyol is preferred most.

The degree of conversion to polyester, which is defined as the percentage of polyol hydroxyl groups that, on an average, have been esterified with fatty acids, should be over 70 %, and preferably is over 85 or even 95 %.

In general and preferably in view of low-calorie aspects, polyol fatty acid polyesters having the high degrees of conversion in accordance with the invention, are selected from indigestible polyesters. For the purposes of the invention by indigestibility is meant that at least about 70 % by weight of the material concerned is not digested by the human body.

Suitable polyol fatty acid polyesters for use in the confectionery filling compositions in accordance with the invention are characterised by an N-line which is somewhat lower and considerably less steep than that of natural cocoa-butter or conventional cocoa-butter equivalent or replacers, an N₂₀ of below 65, and in particular of 20 to 60 having been found suitable, an N₂₀ of 30 to 55, or even of 40 to 50 being preferred. Their N-value at mouth temperature should be low, suitably characterised by an N₃₀ of 0 to 30, particularly of 0 to 10 and preferably of 0 to 5. Even more preferred is an N_{32.5} of between 0 to 5, especially 0 to 1.

The selection of the appropriate blend of fatty acids in the polyester is determined by the above-specified melting characteristics of the polyol fatty acid polyester, as conveniently defined by its N-line or N-values. The N-line is the graph of Nₜ-values versus the temperature t. The Nₜ-value is conveniently measured by the nuclear magnetic relaxation technique and is a direct measure of the level of solid fat content at temperature t. This method is suitably described in Fette, Seifen, Anstrichmittel 80(5), 180-186 (1978). To some extent the measurement of Nₜ-values is dependent on the temperature profile used to prepare the samples for the NMR-measurement. For the purposes of the present invention the following preparatory temperature profile is adopted: first 30 minutes at 60°C, followed by 90 minutes at 0°C, 40 hours at 20°C, again 90 minutes at 0°C and finally 60 minutes at the temperature of the measurement, after which the NMR measurement is carried out.

In general fatty acids per se, lower alkylesters thereof or naturally occurring fats and oils may be used as source for the polyester fatty acids. Conventional techniques may be used to introduce the required fatty acid composition and degree of saturation. Suitable such techniques include full or partial hydrogenation, interesterification and fractionation, and may be used before or after conversion of the polyols to the corresponding polyol fatty acid polyesters.

Sources of suitable polyester fatty acids blends are vegetable oils, in particular soybean, palm and palm kernel oils. Preferably, such oils are partially or fully hydrogenated, and in optimising to specific product specifications the use of mixtures of such partially or fully hydrogenated oils may be of special advantage.

Instead of a 'single' polyol fatty acid polyester, i.e. a polyester which is synthesized from a polyol and a source for the fatty acid residues in a single reaction, also a mixture of polyol fatty acid polyesters may be used provided the overall solids profile of the final blend is in accordance with the present invention. In this specification the term 'blend' is intended to encompass both a single polyol fatty acid polyester and a mixture of more than one polyol fatty acid polyesters.

The continuous fat-phase of the confectionery filling composition or for use therein in accordance with the present invention may consist solely of the blend of one or more polyol fatty acid polyesters, but it may also comprise amounts of milk fats or vegetable oils, in particular flavour-introducing oils, such as natural cocoa-butter and nut oils, such as hazelnut and peanut oils, provided such mixing does not result in a fat phase having a solids versus temperature profile outside the range as indicated hereinbefore for the blend of polyesters. If a mixture is considered desirable, the amount of polyester should be 50 to 100 % by weight of continuous fat-phase in the confectionery filling composition. To take full advantage of the increased resistance to migration, as well as the low-calorie aspect, the continuous fat-phase in the confectionery filling composition or for use therein preferably consists of 75 to 100 %, and most preferably of 80 to 95 %, of the blend of one or more polyol fatty acid polyesters.

The fat phase is the continuous phase of the confectionery filling composition. In general the filling composition comprises from 20 to 90 % by weight of the continuous fat-phase, and preferably comprises from 30 to 60, or even from 40 to 55 % by weight thereof.

Low-calorie confectionery filling compositions in accordance with the present invention comprise in addition to the fat phase one or more conventional filling ingredients such as sugar, water, suitable flavouring, in particular cocoa powder, chocolate liquor or cocoa mass, nut or fruit flavourings, alcohol-based confection materials, milk solids in the form of skimmed or full milk powder, emulsifier, such as in particular lecithin, anti-oxidants, dietary fibres, and vitamins, such as vitamin E.

If included, preferably defatted sources of cocoa flavouring are used in amounts of 5 to 30 % by weight of the product, as also defatted sources of milk solids, such as in particular skimmed milk powder in amounts of 5 to 25 % by weight of the product.

Suitable sugars include the common sugars, such as sucrose and raffinose, included in amounts of from 10 to 60 %, in particular of from 30 to 50 % by weight of the filling composition. These conventional sugars may also be replaced by dietetic sweeteners such as sorbitol, fructose, xylitol and lactitol which provide confectionery filling compositions particularly suitable to avoid tooth decay or in diabetic diets. Such dietetic sweeteners are included in similar amounts as conventional sugars, i.e. in amounts of 30 to 55 % by weight of the final confectionery filling composition. Inclusion of sorbitol and xylitol have the further advantage to increase the cool-melting sensation of the confectionery filling compositions.

It may be of particular advantage to use a low-calorie high-intensity sweetener in combination with the indigestible polyol fatty acid polyesters of the invention to provide confectionery filling compositions having an even further reduced caloric content. Suitable such high-intensity sweeteners include aspartame (phenylalanin), saccharin, cyclamate, sucralose™, acesulfame-K, thaumatin and mixtures thereof. They are normally included in amounts of from 0.1 to 5 % by weight of the product. If so desired, the high-intensity sweeteners may also be used to top up reduced amounts of the common sugars or dietetic sweeteners. High-intensity sweeteners are generally supplemented to the amount of sweeteners they replace, by suitable low-calorie bulking agents, such as polydextrose.

In a particularly preferred embodiment, the present invention provides a fluid filled product having a confectionery coating, in particular chocolate coating, the fat component of which comprises a blend of one or more, preferably indigestible, polyol fatty acid polyesters which blend has a solids profile which lies, preferably significantly, above the solids profile of the polyester component in the filling composition.

The higher-melting blend of polyesters in the confectionery coating not only provides a good barrier agent assisting in a further reduction of any moisture- or fat-migration tendency, it also provides further calorie-reduction and assists in reducing any risks of anal leakage possibly attached, in the case of overconsumption, to the use of the relatively liquid polyol fatty acid polyester component in the confectionery filling.

The use of the higher-melting blend of polyesters in the confectionery coating further allows the manufacture of liquid filled products by route of low-temperature shell-molding conventionally not very suitable for confectionery coatings in view of cracking problems.

Suitable polyol fatty acid polyesters for inclusion in the confectionery coating are substantially analogous to the polyesters described hereinbefore but are preferably characterized by an N₂₀ of 70 to 100, an N₃₀ of 35 to 70 and an N₃₇ of 5 to 15. The fatty acid residues of such polyesters are preferably derived from suitable blends of partially and/or fully hydrogenated vegetable oils, such as soybean, palm oil and lauric oils, such as palm kernel oil.

Preferably the fat component of the confectionery coating substantially fully consists of the polyester component, the amount of fat component in the chocolate coating ranging from 35 to 90 % by weight. Such chocolate coating compositions may further contain ingredients conventionally found in confectionery coating compositions, such as a source of cocoa, sugar, milk solids, flavourings and emulsifiers.

The invention is now further illustrated by way of example.

### EXAMPLE 1

In a comparative experiment confectionery filling model systems were tested using a filling composition according to the invention (1), two reference filling systems (2) and (3) and two conventional chocolate coatings (milk and dark).
The chocolate coating compositions:

| ingredient | milk | plain |
|---|---|---|
| | % by weight | |
| cocoa powder 10/12 | 5 | 20 |
| skimmed milk powder | 17 | - |
| triglyceride fat 1 ^{(*)} | 34 | 33 |
| sugar | 44 | 47 |
| lecithin | 0.4 | 0.4 |

| | | |
|---|---|---|
| (*) non-tempered hydrogenated and fractionated blend of soybean oil and palm oil having N-values of 84 at 20°C, 55 at 30°C and < 2 at 37°C | | |

The filling fat compositions:

| ingredient | composition % by weight | | |
|---|---|---|---|
| | 1 ^{(c)} | 2 | 3 |
| sucrose fatty acid polyester 1 ^{(a)} | 25 | 35 | - |
| sucrose fatty acid polyester 2 ^{(b)} | 75 | - | - |
| triglyceride fat 1 | - | - | 40 |
| groundnut oil | - | 65 | 60 |

| | | | |
|---|---|---|---|
| (a) sucrose fatty acid polyester derived from a blend of 55 % of fully hydrogenated soybean oil (slip melting point 65°C) and 45 % of tough hardened soybean oil (slip melting point 28°C), the polyester having a degree of conversion of over 95 % and N-values of 63 at 20°C, 42 at 30°C and 11 at 37°C. | | | |
| (b) sucrose fatty acid polyester derived from tough hardened soybean oil (slip melting point 28°C), having a degree of conversion of over 95 % and fully liquid at above ambient temperatures. | | | |
| (c) the blend of sucrose fatty acid polyesters in composition (1) has N-values of 18 at 20°C, 8 at 30°C and 4 at 32.5°C. | | | |

The filling model systems were tested using a so-called washer test set-up, and evaluated on visual appearance (bloom, discolouring) and deformation (shape retention, cracking) of the chocolate coatings after 22 weeks of storage at temperatures of 15°C, 20°C and 25°C, and under temperature cycling between 15 and 25°C. Since visual appearance and deformation occur as a result of migration of the filling fat into the chocolate coating, such phenomena can suitably be used as measures of the resistance or lack of resistance to migration.

### Washer test set-up

The testing equipment consisted of two steel washers of 3 mm thickness and 21 mm internal diameter. The bottom washer was glued on a perspex base plate and filled with the confectionery filling and levelled off. Subsequently the top washer was attached on top of the bottom washer and filled with the chocolate coating material of the confectionery filling product. The filling compositions were prepared by simple mixing and introduced into the bottom washer at about 40°C. The chocolate coating compositions were prepared by conventional processing involving mixing, refining by roller mill and conching. They were cooled to about 40°C before introduction into the top washer after which the washer test set-up was cooled in a cooling tunnel at 10 to 15°C.

The results are presented in Table 1, (+) designating good product characteristics and no product change relative to starting condition, (-) designating poor product characteristics, i.e. considerable negative changes relative to starting condition, and (±) designating although still acceptable product characteristics, some changes relative to starting condition.

**TABLE 1**

| PRODUCT CHARACTERISTICS AFTER 22 WEEKS OF STORAGE | | | | | | | |
|---|---|---|---|---|---|---|---|
| temperature | characteristic | milk | | | dark | | |
| | | 1 | 2 | 3 | 1 | 2 | 3 |
| 15°C | visual app. | + | + | + | + | + | + |
| | de-formation | ± | ± | ± | + | + | + |
| 20°C | visual app. | + | + | + | ± | - | - |
| | de-formation | + | + | + | + | + | - |
| 25°C | visual app. | + | + | + | ± | ± | ± |
| | de-formation | ± | - | - | ± | - | - |
| 15/25°C cycling) | visual app. | ± | ± | ± | ± | - | - |
| | de-formation | ± | - | - | ± | - | - |

## Claims

1. A confectionery filling composition of improved resistance to migration, comprising a continuous fat-phase characterized in that it comprises from 50 to 100 % by weight of a blend of one or more polyol fatty acid polyesters derived from aliphatic polyols which comprise at least four free hydroxyl groups, said blend of polyesters having an N₂₀ of below 50, an N₃₀ from 0-30 and an N_{32.5} of 0-5 and 10-60 wt% of a conventional sugar, 30-55 wt% of dietetic sweetener or 0.1-5 wt% of high-intensity sweetener or a high-intensity sweetener topping up a reduced amount of conventional sugar or dietetic sweetener.

2. A composition according to claim 1, the blend of polyesters having an N₂₀ of below 50, an N₃₀ from 0-10 and an N_{32.5} of 0-5.

3. A composition according to claim 1 or 2 in which the continuous fat-phase comprises from 75 to 100 wt% of the blend of polyesters.

4. A composition according to claim 1, 2 or 3 which comprises from 30 to 60 wt% by weight of the continuous fat-phase.

5. A composition according to any of the preceding claims which further comprises 5 to 30 % of defatted source of cocoa flavouring, 5 to 25% of skimmed milk solids and 10 to 60% by weight of sugar.

6. A filled confectionery product comprising a filling composition in accordance with claim 1 and having a confectionery coating which comprises a blend of one or more polyol fatty acid polyesters which blend has a solids profile lying above the solids profile of the polyester compound in the filling composition.

7. A product according to claim 6 in which the blend of polyesters in the coating has an N₂₀ of 70 to 100, an N₃₀ from 35 to 70 and an N₃₇ of 5-15.

## Patentansprüche

1. Konfektfüllungszusammensetzung mit verbesserter Beständigkeit gegen Migration, umfassend eine kontinuierliche Fettphase, dadurch gekennzeichnet, daß sie 50 bis 100 Gew.-% eines Gemischs von einem oder mehreren Polyolfettsäurepolyestern, abgeleitet von mindestens vier freie Hydroxylgruppen umfassenden, aliphatischen Polyolen, wobei das Gemisch von Polyestern einen N₂₀-Wert von weniger als 50, einen N₃₀-Wert von 0 bis 30 und einen N_{32,5}-Wert von 0 bis 5 aufweist, und 10 bis 60 Gew.-% eines herkömmlichen Zuckers, 30 bis 55 Gew.-% eines diätetischen Süßungsmittels oder 0,1 bis 5 Gew.-% eines hochintensiven Süßungsmittels oder ein hochintensives Süßungsmittel, das eine verminderte Menge eines herkömmlichen Zuckers oder diätetischen Süßungsmittels auffüllt, umfaßt.

2. Zusammensetzung nach Anspruch 1, wobei das Gemisch von Polyestern einen N₂₀-Wert von weniger als 50, einen N₃₀-Wert von 0 bis 10 und einen N_{32,5}-Wert von 0 bis 5 aufweist.

3. Zusammensetzung nach Anspruch 1 oder 2, in der die kontinuierliche Fettphase 75 bis 100 Gew.-% des Gemisches von Polyestern umfaßt.

4. Zusammensetzung nach Anspruch 1, 2 oder 3, die 30 bis 60 Gew.-% der kontinuierlichen Fettphase umfaßt.

5. Zusammensetzung nach irgend einem der vorhergehenden Ansprüche, die ferner 5 bis 30 % einer entfetteten Quelle von Kakaoaroma, 5 bis 25 % Magermilchtrockenmasse und 10 bis 60 Gew.-% Zucker umfaßt.

6. Gefülltes Konfektprodukt, umfassend eine Füllungszusammensetzung nach Anspruch 1 und eine Konfektbeschichtung aufweisend, die ein Gemisch von einem oder mehreren Polyolfettsäurepolyestern umfaßt, welches Gemisch ein Feststoffprofil aufweist, das oberhalb des Feststoffprofils der Polyesterverbindung in der Füllungszusammensetzung liegt.

7. Produkt nach Anspruch 6, in welchem des Gemisch von Polyestern in der Beschichtung einen N₂₀-Wert von 70 bis 100, einen N₃₀-Wert von 35 bis 70 und einen N₃₇-Wert von 5 bis 15 aufweist.

## Revendications

1. Composition de fourrage pour confiserie qui a une résistance améliorée à la migration, comprenant une phase grasse continue, caractérisée en ce qu'elle comprend de 50 à 100% en poids d'un mélange d'un ou plusieurs polyesters d'acides gras de polyols dérivés de polyols aliphatiques comprenant au moins quatre groupes hydroxyle libres, ledit mélange de polyesters ayant un N₂₀ en dessous de 50, un N₃₀ de 0 à 30 et un N_{32,5} de 0 à 5 et 10 à 60% en poids d'un sucre classique, 30 à 55% d'un édulcorant diététique ou 0,1 à 5% d'un édulcorant de forte intensité ou d'un édulcorant de forte intensité faisant l'appoint d'une quantité réduite de sucre classique ou d'édulcorant diététique.

2. Composition selon la revendication 1, le mélange de polyesters ayant un N₂₀ au dessous de 50, un N₃₀ de 0 à 10 et un N_{32,5} de 0 à 5.

3. Composition selon la revendication 1 ou 2, dans laquelle la phase grasse continue comprend de 75 à 100% en poids du mélange de polyesters.

4. Composition selon la revendication 1, 2 ou 3, qui comprend de 30 à 60% en poids de la phase grasse continue.

5. Composition selon l'une quelconque des revendications précédentes qui comprend en outre de 5 à 30% d'une source dégraissée d'aromatisant de cacao, 5 à 25% d'extraits de lait écrémé et 10 à 60% en poids de sucre.

6. Produit de confiserie fourré comprenant un composition de fourrage selon la revendication 1 et ayant un enrobage de confiserie qui comprend un mélange d'un ou plusieurs polyesters d'acides gras de polyols, ce mélange ayant un profil de solides se situant au dessus du profil de solides du composé polyester dans la composition de fourrage.

7. Produit selon la revendication 6, dans lequel le mélange de polyesters dans l'enrobage a un N₂₀ de 70 à 100, un N₃₀ de 35 à 70 et un N₃₇ de 5 à 15.
